# EUROPÄISCHE PATENTSCHRIFT

(11) **EP 1 199 234 B1**
(45) Veröffentlichungstag und Bekanntmachung des Hinweises auf die Patenterteilung: **15.10.2008**
(21) Anmeldenummer: 01122080.3
(22) Anmeldetag: 14.09.2001
(51) Int. Cl.: B60T 1/00, G05G 1/14

(54) **Notentriegelungseinrichtung für die Parksperre eines Kraftfahrzeugs**
Emergency unlocking device for a parking brake in a motor vehicle
Dispositif de déverrouillage de secours pour un frein de stationnement dans un véhicule automobile

(30) Priorität: 19.10.2000 DE 10052259
(43) Veröffentlichungstag der Anmeldung: 24.04.2002
(73) Patentinhaber: DEERE & COMPANY, Moline, Illinois 61265-8098 (US)
(72) Erfinder: Schäfer, Helmut, 68775 Ketsch (DE); Hoess, Bruno, Dr., 77833 Ottersweier (DE); Münch, Peter, 68167 Mannheim (DE); Zahn, Klaus, 76684 Östringen (DE)
(74) Vertreter: Magin, Ludwig Bernhard

(56) Entgegenhaltungen:
- DE-A- 19 834 074
- US-A- 3 815 713

## Beschreibung

Die Erfindung betrifft eine Notentriegelungseinrichtung für die Parksperre eines Kraftfahrzeugs mit einer Betätigungsmechanik, die durch Federmittel in ihre eingerückte Position gedrängt und die durch wenigstens einen durch Ansteuermittel betätigbaren Stellantrieb gegen die Federkraft in ihre ausgerückte Position bewegbar ist. Die Betätigungsmechanik ist mittels mechanischer Verbindungsmittel mit einem in dem Fahrzeugführerstand angeordneten Entriegelungshebel derart verbindbar, dass sich die Parksperre bei Betriebsstörungen notentriegeln lässt.

Bei heutigen Fahrzeuggetrieben (synchronisierte, lastschaltbare oder automatische Getriebe) wird die Parksperre üblicherweise manuell über mechanisches Gestänge eingelegt, um die Drehbewegung von Getriebe- oder Fahrzeugrädern formschlüssig zu blockieren. Im Zuge von Komfortverbesserung werden Getriebe mit elektrisch betätigter Gangschaltung ausgeführt, so dass der Gangschaltbefehl von der Bedienungsperson per Knopfdruck erfolgt. In diese Servobetätigung sollte sinnvollerweise auch die Parksperre mit einbezogen werden. Bei Verwendung stufenloser Getriebe, die einen kraftschlüssigen Stillstand durch Einstellung einer unendlich großen Übersetzung realisieren können, sollte die Parksperrenbetätigung automatisiert werden, damit der Übergang von kraftschlüssigem Stillstand in die Parkstellung (und umgekehrt) ohne Unterbrechung der Bremswirkung des Fahrzeuges erfolgt. Es wird somit angestrebt, die Betätigung einer Parksperre (einer mechanischen, formschlüssigen Verriegelung eines abtriebseitigen Zahnrades) so zu gestalten, dass das Verriegeln und Entriegeln der Parksperre durch eine elektrische Befehlsübertragung erfolgt.

Solche automatisierten Betätigungen der Parksperrenfunktion sind üblicherweise so ausgeführt, dass im Stillstand des Fahrzeuges die Parksperre über einen mechanischen Federspeicher eingerückt ist. Bei Inbetriebnahme des Fahrzeuges kann die Parksperre entgegen der Kraftwirkung des Federspeichers mittels einer an Bord vorhandenen Hilfsenergie beispielsweise elektrisch oder hydraulisch ausgerückt werden. Fällt diese Hilfsenergie aus, wird eine manuelle Notentriegelung benötigt, um das Fahrzeug abschleppen zu können.

Für den Fall, dass das Arbeitsfahrzeug, beispielsweise ein landwirtschaftlicher Schlepper, bei Ausfall der Bordelektrik, der Hydraulik oder des Antriebsmotors abgeschleppt oder bewegt werden muss, ist es bekannt, parallel zu der elektro-hydraulischen Betätigung eine mechanische Notbetätigung zum Ausrücken und Wiedereinrücken der Parksperre vorzusehen. Beispielsweise erwähnt die DE-A-198 34 074 eine Vorrichtung zur Entriegelung einer Parksperre für ein Automatik-Getriebe, bei der im Fahrgastraum ein Hebel vorgesehen ist, welcher in Wirkverbindung mit einer Parkklinke steht. Für die Wirkverbindung wird ein Bowdenzug verwendet, durch den die Übertragung unerwünschter Schwingungen vom Getriebe zur Fahrgastzelle vermieden werden soll. Die bekannten Lösungen für eine Notbetätigung der Parksperre erfüllt jedoch nicht alle Sicherheitsanforderungen, die an ein modernes Arbeitsfahrzeug mit automatischem Getriebe gestellt werden, um Gefahren, die von Fehlbedienungen ausgehen können, zu vermeiden.

Die der Erfindung zugrunde liegende Aufgabe wird darin gesehen, eine Notentriegelungseinrichtung der eingangs genannten Art anzugeben, durch die die vorgenannten Probleme überwunden werden. Insbesondere sollen Gefahren, die von Fehlbedienungen ausgehen, vermieden werden. Die Notentriegelungseinrichtung soll aus einfachen, preiswerten Elementen bestehen und eine missbrauchssichere Fernbedienung bei laufendem oder stehendem Antriebsmotor ermöglichen. Sie soll eine schnelle, einfache und bequeme Notentriegelung der Parksperre ermöglichen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Notentriegelungseinrichtung für die Parksperre eines Kraftfahrzeugs enthält eine Betätigungsmechanik. Diese wird durch die Haltekraft von Federmitteln in eine eingerückte Parksperrenposition gedrängt und durch wenigstens einen Stellantrieb, der durch Ansteuermittel betätigbar ist, gegen die Haltekraft in ihre ausgerückte Position bewegt. Die Betätigungsmechanik ist mittels mechanischer Verbindungsmittel mit einem in dem Fahrzeugführerstand angeordneten Kupplungspedal wahlweise lösbar verbindbar. Die lösbare Verbindung ist so ausgebildet, dass sich auf einfache Weise jederzeit und an jedem Ort eine Wirkverbindung zwischen Kupplungspedal und Parksperre herstellen lässt, um durch Betätigung des Kupplungspedals eine Notentriegelung der Parksperre herbeizuführen. Durch die Verbindung des Kupplungspedals mit der Parksperre ergibt sich eine zum Stellantrieb parallele mechanische Krafteinleitung zum Ausrücken der Parksperre.

Die erfindungsgemäße Notentriegelungseinrichtung lässt sich mit sehr einfachen, preiswerten Bauelementen realisieren. Ein zusätzlicher Hebel im Fahrgastraum, wie ihn der Stand der Technik vorsieht, ist nicht erforderlich. Die Kopplung mit dem vorhandenen Kupplungspedal verringert die Gefahr von Fehlbedienungen, weil sich für einen Notbetrieb, beispielsweise beim Abschleppen, die Parksperre nur bei ausgerückter Kupplung entriegeln lässt. Damit ist bei einem derartigen Notbetrieb der Antriebsstrang zwischen dem Getriebe und den Fahrzeugrädern immer unterbrochen. Die Notentriegelung kann unabhängig davon, ob der Antriebsmotor läuft oder steht vorgenommen werden. Um die Notentriegelung wirksam zu machen, ist lediglich ein kabinenseitiges Ende der Verbindungsmittel an dem Kupplungspedal zu befestigen. Dies kann auf einfache und schnelle Weise an beliebigem Ort und zu beliebiger Zeit, gegebenenfalls unter Zuhilfenahme eines einfachen Werkzeugs, geschehen. Die Parksperre eines während des Betriebs defekt gewordenen Fahrzeugs, kann somit entriegelt werden, um das Fahrzeug abschleppen zu können.

Die Notentriegelung über das Kupplungspedal, also über Fußkraft, ist auch unter dem Gesichtspunkt der Bedienkräfte vorteilhaft, denn die Rückstellfedern der Betätigungsmechanik der Parksperre müssen zur Erzielung einer hohen Einrückgeschwindigkeit besonders kräftig ausgelegt werden. Diese Kräfte können mit dem Fuß leicht aufgebracht und überwunden werden.

Vorzugsweise enthalten die Verbindungsmittel einen Bowdenzug, dessen eines Ende unmittelbar oder unter Zwischenschaltung weiterer Bauteile an der Betätigungsmechanik befestigt ist. Der Bowdenzugs ist zum Fahrerstand geführt. Sein anderes Ende ist bei normalem Betrieb in der Nähe des Kupplungspedals verwahrt und nicht an dem Kupplungspedal angeschlossen, so dass die Notentriegelung nicht in Funktion ist.

Wird die Notentriegelung beispielsweise zum Abschleppen eines defekten Fahrzeuges benötigt, kann das kabinenseitige Ende des Bowdenzugs mit wenigen einfachen Handgriffen (evtl. unter Zuhilfenahme eines Werkzeuges) unmittelbar oder unter Zwischenschaltung weiterer Bauteile am Kupplungspedal angeschlossen werden. Beim Anschließen befindet sich das Kupplungspedal in seiner Ruhestellung, die einer eingerückten Kupplung entspricht. Während dieser Montagearbeit nimmt das Fahrzeug eine sichere Parkposition ein.

Zur Entriegelung der Parksperre muss dann das Kupplungspedal lediglich durchgetreten werden. Hierbei befindet sich die Bedienungsperson zwangsläufig im Fahrersitz. Sie hat also das Fahrzeug im Moment des Lösens der Parksperre unter Kontrolle und kann jederzeit über das Kupplungspedal die Parksperre wieder einrücken und auch die Bremse und die Lenkung in üblicher Weise bedienen. Die Notentriegelungseinrichtung lässt sich ohne weiteres wieder außer Funktion setzen, in dem das kabinenseitige Ende des Bowdenzugs. von dem Kupplungspedal gelöst wird.

Grundsätzlich können die Verbindungsmittel, beispielsweise der Bowdenzug, an einem beliebigen beweglichen Teil der Betätigungsmechanik für die Parksperre befestigt sein. Sie können beispielsweise an einem mechanischen Verriegelungsgestänge durch das eine Sperrklinke der Parksperre betätigt wird angreifen.

Häufig enthält die Parksperre als Stellantrieb einen Hydraulikzylinder, dessen Betätigungskolben auf ein durch Federmittel in die verriegelte Stellung gedrängtes Verriegelungsgestänge einwirkt und dieses bei Druckbeaufschlagung des Betätigungskolbens gegen die Haltekraft der Federmittel in die entriegelte Stellung drückt. Der Betätigungskolben kann als Teil der Betätigungsmechanik angesehen werden, an dem in einer besonders vorteilhaften Weiterbildung der Erfindung die Verbindungsmittel angreifen. Durch diese Maßnahme wird der normale Betrieb der Parksperre nicht behindert, denn wenn die Notentriegelung nicht betätigt wird, reagiert die Parksperrenmechanik wie gewohnt. Der Betätigungskolben wird durch die Federkraft gegen einen ersten Anschlag gedrückt, der der verriegelten Position entspricht. Wird der Kolbenraum unter Druck gesetzt, so wird der Betätigungskolben gegen seinen zweiten Anschlag, der der entriegelten Position entspricht, gedrückt und das Verriegelungsgestänge rückt die Parksperre aus. Diese normalen Bewegungen der Parksperrenmechanik führen zu keiner Bewegung der Notbetätigung. Andererseits kann die Notbetätigung permanent unter Krafteinwirkung in der verriegelten Betätigungsposition gehalten werden.

Vorzugsweise erstreckt sich ein axial verschiebbares Betätigungselement, beispielsweise ein Betätigungsbolzen, durch eine Wandung des Hydraulikzylinders und ist gegenüber der Wandung abgedichtet. Bei einer Betätigung des Betätigungselementes, wirkt dieses auf den Betätigungskolben ein, und bewegt diesen gegen die Kraft der Federmittel in seine entriegelte Stellung. Diese Ausbildung ist besonders dann von Vorteil, wenn sich das Verriegelungsgestänge der Parksperre innerhalb eines Getriebegehäuses befindet und somit schwer zugänglich ist, während der Hydraulikzylinder außen am Getriebegehäuse befestigt ist und einen leichten Zugang ermöglicht. Hierbei reduziert die genannte Ausbildung den konstruktiven Aufwand und erleichtert eine spätere Nachrüstung.

Eine einfache Ausbildung der Erfindung ist dadurch gegeben, dass das Betätigungselement in den Kolbenraum des Hydraulikzylinders ragt und an der Kolbenstirnseite angreift. Des weiteren ist es von Vorteil, einen Umlenkhebel vorzusehen, dessen mittlerer Bereich an einem Gehäuseteil, beispielsweise am Getriebegehäuse, schwenkbar gelagert ist. An dem ersten Ende des Umlenkhebels greift ein Ende des Bowdenzugs an, während das zweite Ende des Umlenkhebels auf das Betätigungselement einwirkt, um dieses gegebenenfalls axial zu verschieben.

Um bei einem Abschleppvorgang über eine größere Wegstrecke nicht ständig das Kupplungspedal betätigen zu müssen, sind gemäß einer bevorzugten Weiterbildung der Erfindung Arretierungsmittel vorgesehen, durch die sich das Kupplungspedal in seiner durchgetretenen Stellung (Parksperre entriegelt) arretieren lässt. Als Arretierungsmittel kommt beispielsweise ein Bolzen in Betracht, der von der Bedienungsperson in den Träger des Kupplungspedals gesteckt wird. Diese Arretierung kann somit von der Bedienungsperson bedient werden, während sie sich auf dem Fahrersitz befindet und das Kupplungspedal durchgetreten hält, also auch hier das Fahrzeug unter Kontrolle hat.

Wird die genannte Arretierung nicht verwendet, sondern der Abschleppvorgang bei getretenem Pedal durchgeführt, und lässt die Bedienungsperson durch Unachtsamkeit während der Fahrt das Kupplungspedal teilweise einrücken, so besteht keine Gefahr eines plötzlichen Blockierens der Antriebsräder, da die Sperrklinke bis herunter zu geringen Geschwindigkeiten vom drehenden Zahnrad abgewiesen wird. Zudem wird die Bedienungsperson schon bei geringster Berührung der Zahnspitzen über ein lautes Geräusch gewarnt und kann entsprechend reagieren.

Um nach Beendigung des Abschleppvorgangs die normale Parksperrenfunktion wieder einzustellen, wird zunächst das Kupplungspedal mit Fußkraft getreten, um die Arretierung zu entlasten und wieder lösen zu können. Anschließend lässt sich durch Lösen des Kupplungspedals die Parksperre wieder kontrolliert einrücken, ohne dass das Kupplungspedal unter Wirkung der Federmittel des Betätigungsmechanismus unkontrolliert zurückschlagen kann.

Eine bevorzugte Weiterbildung der Erfindung sieht vor, wenigstens einen Kupplungssensor zu verwenden, der die Stellung des Kupplungspedals erfasst. Als Kupplungssensor kommt insbesondere ein Lageschalter in Betracht, der bei durchgetretenem Kupplungspedal umschaltet. Kupplungssensoren sind insbesondere bei Fahrzeugen mit automatischem Getriebe meist ohnehin vorhanden und können für die erfindungsgemäßen Zwecke mitverwendet werden. Eine gesonderte Sensorik ist daher häufig nicht erforderlich. Wenn das Kupplungspedal durchgetreten ist, gibt der Kupplungssensor ein entsprechendes Signal an die Getriebesteuerung ab, die veranlasst, dass die Kupplung geöffnet wird oder offen bleibt. Damit ist auch für einen Abschleppvorgang mit notentriegelter Parksperre sichergestellt, dass das Getriebe von den Fahrzeugrädern getrennt bleibt.

Bei einem Fahrzeug mit Automatikgetriebe geben die Signalgeber, wie Potentiometer und Schalter, am Kupplungspedal Steuersignale an die elektronische Getriebesteuerung um das Getriebe auf "Neutral" bzw. Freilauf zu stellen, sobald das Kupplungspedal durchgetreten ist. Diese Steuersignale werden auch erzeugt, wenn das Kupplungspedal bei einer Notbetätigung, z. B. bei Verlust der Parksperrenfunktion, für das Abschleppen betätigt wird. Hierbei kann der Antriebsmotor des Fahrzeugs in Betrieb sein, um den Versorgungsdruck für die Servolenkung und die Servobremse bereitzustellen. Es sind somit für die Notentriegelung der Parksperre keine weiteren Rückmeldesensoren erforderlich, die der Getriebesteuerung mitteilen, dass die Parksperre manuell ausgerückt wurde. Über die Anbindung der Notentriegelung an das Kupplungspedal ist ein Missbrauch nicht möglich, bei dem das Fahrzeugs mit permanent entriegelter Parksperre betrieben wird. Da keine zusätzliche Sensoren erforderlich sind, können diese auch keine zusätzliche potentielle Fehlerquelle darstellen.

Die erfindungsgemäße Notentriegelung ist robust und selbst dann betriebssicher, wenn irrtümlich trotz normaler Funktion der elektro-hydraulischen Betätigung die Notentriegelung benutzt wird. Die Verwendung eines Bowdenzugs ermöglicht eine beliebige Fernbetätigung. Die Notentriegelung ist missbrauchssicher, da ihre Bedienung den normalen Betrieb des Fahrzeugs ausschließt. Sie lässt sich sowohl bei laufendem als auch bei stehendem Antriebsmotor benutzen.

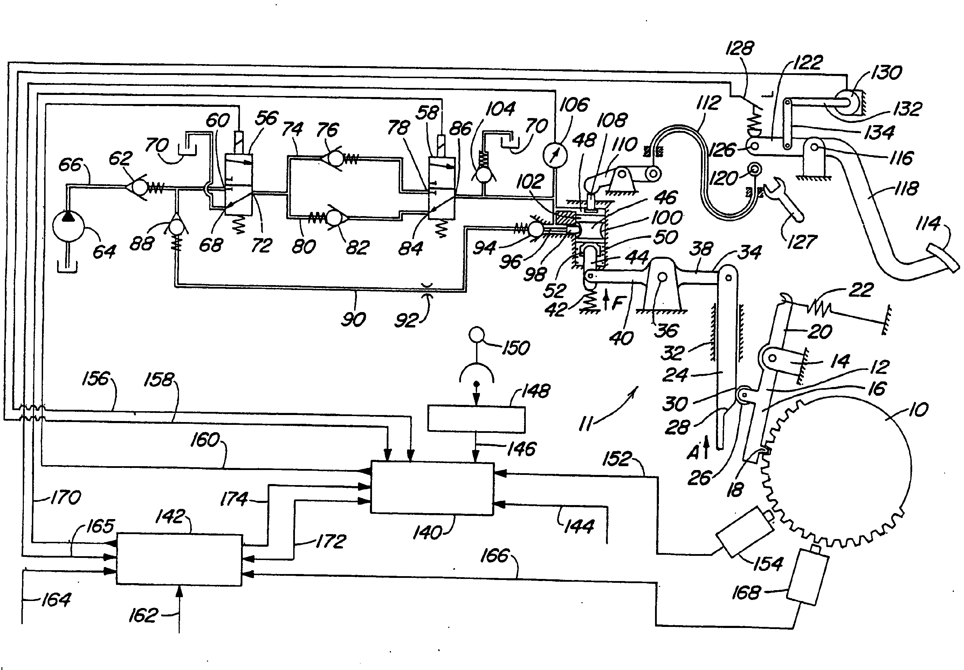

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert. In der einzigen Figur ist das Funktionsschema einer erfindungsgemäßen Steuereinrichtung mit hydraulischen und elektrischen Steuerkreisen schematisch dargestellt.

Die dargestellte Steuereinrichtung kann bei einer Parksperre eines Ackerschleppers Anwendung finden. Es ist ein Ausgangszahnrad 10 des Fahrzeuggetriebes erkennbar, das drehfest mit den nicht dargestellten angetriebenen Achsen und Rädern des Ackerschleppers verbunden ist.

Es ist eine mechanische Verriegelungsvorrichtung 11 vorgesehen, die eine wippenförmig ausgebildete Sperrklinke 12 enthält, welche mittels einer Halterung 14 verschwenkbar am nicht gezeigten Getriebegehäuse oder Fahrzeugchassis gelagert ist. Ein erster Arm 16 der Sperrklinke 12 trägt eine Verzahnung 18. Durch Verschwenken der Sperrklinke 12 lässt sich die Verzahnung 18 der Sperrklinke 12 mit der Verzahnung des Ausgangszahnrades 10 in Eingriff bringen, so dass Formschluss hergestellt und eine Drehung des Ausgangszahnrades 10 und damit eine Bewegung des Fahrzeugs verhindert wird. Die Verzahnungsgeometrie ist abweisend gestaltet, so dass auch unter Maximalbelastungen (Fahrzeuggewicht, Hangneigung, Traktionsbeiwert etc.) die Sperrklinke 12 sicher aus ihrem Eingriff mit dem Ausgangszahnrad 10 lösbar ist. Am zweiten Arm 20 der Sperrklinke 12 greift eine Rückstellfeder 22 an, die ein sicheres Rückstellen der Sperrklinke 12 in ihre Ruhestellung, in der ihre Verzahnung 18 nicht in die Verzahnung des Ausgangszahnrades 10 eingreift, bewirkt, sofern auf die Sperrklinke 12 keine weitere mechanische Kraft ausgeübt wird.

Die Verriegelungseinrichtung 11 kann des weiteren eine federvorgespannte Betätigungswelle enthalten, deren Stirnseite Betätigungsnocken aufweist. Beim Verdrehen der Betätigungswelle tritt der Betätigungsnocken über eine reibungsmindernde Rolle mit einer Sperrklinke 12 in Eingriff, und bewirkt ein Verschwenken der Sperrklinke 12. Eine derartige Ausbildung ist bekannt und wird beispielsweise bei den John Deere Ackerschleppern der Serie 6610 verwendet. Zum besseren Verständnis ist in der Zeichnung an Stelle der Betätigungswelle ein verschiebbarer Riegel 24 dargestellt. Der Riegel 24 weist an einer Seite eine schräge Rampe (Nocken) auf, die über eine am ersten Arm 16 der Sperrklinke 12 angebrachte reibungsmindernde Rolle 26 ein Verschwenken der Sperrklinke 12 bewirkt. Die Rampe umfasst einen Bereich 28 mit steilerem Winkel, der im Schwenkbereich der Sperrklinke 12 liegt, und einen Bereich 30 mit flachem Winkel, der im Eingriffsbereich (Parkstellung) der Sperrklinke 12 liegt und die Rückwirkung von hohen fahrzeugseitigen Lasten auf die Betätigung minimiert. Durch Verschiebung des Riegels 24 in Pfeilrichtung A wird die Sperrklinke 12 in ihre ausgerückte Stellung, und durch Zurückschieben gegen die Pfeilrichtung A in ihre eingerückte Parkposition, in der der Bereich 30 mit flacherem Winkel mit der Rolle 26 in Eingriff steht (wie dargestellt), verstellt.

Der in einer Führung 32 geführte Riegel 24 ist an einem ersten Arm 34 eines um eine ortsfeste Drehachse 36 verschwenkbaren Balkens 38 gelenkig angeordnet. An dem zweiten Arm 40 des Balkens 38 greift eine Hauptfeder 42 an, die eine Kraft in Pfeilrichtung F ausübt und den Riegel 24 gegen die Pfeilrichtung A in die dargestellte eingerückte Stellung drängt. Im Gegensatz zu bisherigen manuellen Betätigungen nimmt die Verriegelungseinrichtung 11 bei fehlender weiterer Krafteinwirkung ihre verriegelte (eingerückte) Position (Default-Stellung) ein. Dies gewährleistet bei Ausfall der Hilfsenergie einen sicheren Fahrzeugzustand.

Am zweiten Arm 40 des Balkens 38 greift des weiteren der Betätigungsschaft 44 eines hydraulischen Betätigungskolbens 46 gelenkig an. Der Kolben 46 wird von einer Gehäusebohrung verschiebbar aufgenommen und begrenzt an seiner dem Betätigungsschaft 44 abgewandten Stirnseite einen Kolbenraum 48. Eine Druckfeder 50 drängt den Kolben 46 in Richtung Kolbenraum 48. Der Betätigungsschaft 44 ist am Kolben 46 nicht starr befestigt. Vielmehr ist zwischen beiden Bauteilen eine Gleitverbindung 52 vorgesehen, die eine Druckkraftübertragung ermöglicht jedoch keine Zugkraftübertragung zulässt.

Wird der Kolbenraum 48 unter Druck gesetzt, so verschiebt sich der Kolben 46 gegen die Kraft der Druckfeder 50 nach unten und drückt über den Betätigungsschaft 44 auf den Balken 38, welcher gegen die Kraft der Hauptfeder 42 verschwenkt wird und den Riegel 24 nach oben verschiebt. Damit geht die Rolle 26 aus dem Bereich 30 mit flachem Winkel in den Bereich 28 mit steilerem Winkel über und gibt die Sperrklinke 12 frei, welche durch die Kraft der Rückstellfeder 22 in ihre ausgerückte Position geschwenkt wird.

Wird die im Kolbenraum 48 herrschende Druckkraft infolge eines Einrücksignals abgeschaltet, so reagiert der Kolben 46 unmittelbar. Er wird durch die Druckfeder 50 nach oben geschoben und drückt das Flüssigkeitsvolumen aus dem Kolbenraum 48. Wegen der Gleitverbindung 52 zwischen Kolben 46 und Betätigungsschaft 44 verschiebt sich der Kolben 46 unabhängig davon, ob die mechanischen Bauteile der Verriegelungseinrichtung 11 der Kolbenverschiebung folgen.

Die Ausbildung der genannten Gleitverbindung 52 wirkt sich dann besonders vorteilhaft aus, wenn zum Zeitpunkt eines Einrücksignals die Verzahnung der Sperrklinke 18 auf der Verzahnung des Ausgangszahnrades 10 aufsteht (Zahn auf Zahn), so dass ein Ineinandergreifen der Verzahnungen zunächst noch nicht möglich ist. Die Bauteile der Verriegelungseinrichtung 11, insbesondere der Balken 38 und der Betätigungsschaft 44 können dann nicht ihre eingerückte Position einnehmen. Unabhängig hiervon wird jedoch der Kolben 46 durch die Kraft der Druckfeder 50 nach oben geschoben und entleert den Kolbenraum 48, was infolge von Durchflusswiderständen der den Kolbenraum 48 ansteuernden hydraulischen Bauteile (abhängig von der Ölviskosität) eine kleine Zeitspanne beanspruchen kann. Erfolgt dann durch Verdrehen des Ausgangszahnrades 10 der Zahneingriff, können die Bauteile der Verriegelungseinrichtung 11 ohne Zeitverlust, schlagartig nachrücken, ohne dass die Einrückbewegung durch hydraulische Durchflusswiderstände und dergleichen gedämpft wird. Ein schneller Zahneingriff ist wünschenswert, um zu verhindern, dass das Ausgangszahnrad 10 bei starker Beschleunigung eine hohe Drehgeschwindigkeit erreicht, so dass durch eine hohe Relativbewegungen der Verzahnungen ein Zahneingriff erschwert wird oder nicht mehr möglich ist.

Die Steuerung des Druckmittelflusses zum und vom Kolbenraum 48 erfolgt durch zwei 3/2-Wege-Magnetventile 56, 58, die elektrische Befehle in hydraulische Befehle umsetzen. Der erste Eingang 60 des ersten Magnetventils 56 steht unter Zwischenschaltung eines federbelasteten Eingangsrückschlagventils 62 mit einer durch eine Druckquelle 64 gespeisten Druckversorgungsleitung 66 in Verbindung. Das Eingangsrückschlagventil 62 verhindert einen Druckmittelrückfluss von dem ersten Magnetventil 56 zu der Druckversorgungsleitung 66. Es öffnet, wenn der Druck in der Druckversorgungsleitung 66 eine Gegenkraft überwindet, die durch eine Feder des Eingangsrückschlagventils 62 erzeugt wird. Bei der Druckquelle 64 handelt es sich beispielsweise um eine Hydraulikpumpe und übliche Mittel zur Druckregulierung, die insbesondere auch andere Verbraucher des Ackerschleppers versorgen, was jedoch nicht dargestellt wurde.

Ein zweiter Eingang 68 des ersten Magnetventils 56 steht unmittelbar mit einem Vorratsbehälter 70 oder Sumpf in Verbindung. Der Ausgang 72 des ersten Magnetventils 56 ist bei anliegender elektrischer Spannung mit dem ersten Eingang 60 und im stromlosen Zustand (wie dargestellt) mit dem zweiten Eingang 68 verbunden.

Der Ausgang 72 des ersten Magnetventils 56 steht über eine erste Verbindungsleitung 74, in der ein erstes Rückschlagventil 76 angeordnet ist, mit einem ersten Eingang 78 des zweiten Magnetventils 58 und über eine zweite Verbindungsleitung 80, in der ein zweites Rückschlagventil 82 angeordnet ist, mit einem zweiten Eingang 84 des zweiten Magnetventils 58 in Verbindung. Das erste Rückschlagventil 76 ist federbelastet und so angeordnet, dass es einen Rückstrom vom zweiten Magnetventil 58 zum ersten Magnetventil 56 verhindert. Das zweite Rückschlagventil 82 ist federbelastet und so angeordnet, dass es einen Zustrom vom ersten Magnetventil 56 zum zweiten Magnetventil 58 verhindert.

Der Ausgang des zweiten Magnetventils ist bei anliegender elektrischer Spannung am zweiten Magnetventil 58 mit dem ersten Eingang 78 und im stromlosen Zustand des zweiten Magnetventils 58 mit dem zweiten Eingang 84 (wie dargestellt) verbunden. Der Ausgang 86 des zweiten Magnetventils 58 steht mit dem Kolbenraum 48 in Verbindung.

Der Kolbenraum 48 steht auch über eine weitere Ventilanordnung mit der Druckversorgungsleitung 66 in Verbindung, und zwar über das Eingangsrückschlagventil 62, ein Druckhalterückschlagventil 88, eine Verbindungsleitung 90, in der eine die Durchflussmenge begrenzende Drosselstelle 92 angeordnet ist, und ein Leckagekompensationsventil 94. Das Druckhalterückschlagventil 88 ist federbelastet und verhindert einen Flüssigkeitsrückfluss von dem Kolbenraum 48 zur Druckversorgungsleitung 66. Das Leckagekompensationsventil 94 ist ein federbelastetes Rückschlagventil, das den Flüssigkeitszustrom zum Kolbenraum 48 normalerweise verhindert und das sich durch ein vom Kolben 46 beeinflusstes Verbindungsglied öffnen lässt. Das Verbindungsglied enthält einen Steuerstift 96, dessen Kopf 98 in eine Ringnut 100 des Kolbens 46 eingreift, sofern sich der Kolben 46 in seiner drucklosen Ruhestellung befindet (wie dargestellt). In dieser Lage des Steuerstiftes 96 ist das Leckagekompensationsventil 94 geschlossen. Wenn sich der Kolben 46 durch Druckerhöhung im Kolbenraum 48 nach unten bewegt, wird der Steuerstift 96 aus der Ringnut 100 gedrückt und gleitet auf den dem Kolbenraum 48 zugewandten Bund 102 des Kolbens 46. Dabei verschiebt sich der Steuerstift 96 und öffnet das Leckagekompensationsventil 94, wodurch eine Verbindung zwischen der Druckversorgungsleitung 66 und dem Kolbenraum 48 hergestellt wird. Der Druckmittelstrom wird jedoch durch die Drosselstelle 92 begrenzt und reicht lediglich aus, um Leckageverluste auszugleichen. Wird der Kolbenraum 48 über die Magnetventile 56, 58 mit dem drucklosen Vorratsbehälter 70 verbunden, so fällt der Druck im Kolbenraum 48 ab, der Kolben 46 verschiebt sich nach oben, der Steuerstift 96 gleitet in die Ringnut 100 und das Leckagekompensationsventil 94 schließt unter Wirkung seiner Federkraft, so dass der Kolbenraum 48 von der Druckversorgungsleitung 66 getrennt ist.

Der Kolbenraum 48 steht über ein Ablassventil 104 mit dem Vorratsbehälter 70 in Verbindung. Ist der Kolbenraum 48 drucklos, wird das Ablassventil 104, das nach Art eines Rückschlagventils ausgebildet ist, durch Federkraft geöffnet. Über das Ablassventil 104 kann daher eine gewisse Leckflüssigkeitsmenge abgeführt werden, wenn bei drucklosem Kolbenraum 48 die Parksperre eingerückt ist. Werden die beiden Magnetventile 56, 58 eingeschaltet, die Verbindung von der Druckversorgung 64 zum Kolbenraum 48 also hergestellt, so wird das Ablassventil 104 durch die Strömungskraft der abfließenden Flüssigkeit geschlossen, so dass dann der Druck im Kolbenraum 48 ansteigt und die Parksperre ausrückt.

Der Druck des Kolbenraums 48 wird durch einen Drucksensor 106 erfasst und in elektrische Signale umgewandelt. Das vom Drucksensor 106 ausgegebene Drucksignal gibt im wesentlichen die jeweilige Stellung des Kolbens 46 und damit auch die Stellung der Verriegelungsvorrichtung 11 wieder.

Es ist eine manuell betätigbare mechanische Notbetätigungseinrichtung für die Parksperre vorgesehen, durch die sich die Parksperre ausrücken lässt, wenn eine Störung vorliegt, beispielsweise bei einem Ausfall der elektrischen oder hydraulischen Versorgung. Eine Notbetätigung kann z. B. für das Abschleppen des Fahrzeugs erforderlich sein. Die Notbetätigungseinrichtung greift an dem Kolben 46 an und wird über Gestänge oder Bowdenzug in die Fahrerkabine geführt und kann dort über geeignete Hebel oder Pedale von der Bedienungsperson betätigt werden. Zum Abschleppen muss diese Bedienung kabinenseitig arretiert werden. Die mechanische Parksperre ist so beschaffen, dass die normalen Bewegungen der oben beschriebenen Parksperrenmechanik zu keiner Bewegung der Notbetätigungseinrichtung führen. Dies wird über entsprechende Lose oder Freilauffunktionen sichergestellt.

Die dargestellte Notbetätigungseinrichtung enthält einen Betätigungsbolzen 108, der auf die Stirnseite des Kolbens 46 wirkt und über einen Umlenkhebel 110 und Bowdenzug 112 betätigbar ist. Die Durchführung des Betätigungsbolzens 108 vom Kolbenraum 48 nach außen ist auf geeignete Weise gedichtet. Hubbewegungen des Kolbens 46 beim Einrücken und Ausrücken der Parksperre werden nicht auf den in Ruhestellung dargestellten Betätigungsbolzen übertragen.

Es ist ein Kupplungspedal 114 des Fahrzeugs dargestellt, welches an einem auf einer ortsfesten Drehachse 116 montierten Pedalhebel 118 befestigt ist. Das Kupplungspedal 114 lässt sich für eine Notbetätigung der Parksperre nutzen, indem das obere Ende 120 des Bowdenzugs 112 mit dem freien Ende 122 des Pedalhebels 118 verbunden wird. Hierzu wird beispielsweise eine Bohrung des Bowdenzugs 112 in einen vom freien Ende 122 des Pedalhebels 118 abstehenden Bolzen 126 eingehängt und gegebenenfalls gesichert. Zum Einhängen und Sichern kann ein symbolisch dargestelltes Werkzeug 127 verwendet werden.

Bei Betätigung des Kupplungspedals 114, wird das eingehängte Ende 120 des Bowdenzugs 112 nach oben gezogen. Dabei verschwenkt der Umlenkhebel 110 und drückt den Betätigungsbolzen 108 nach unten, so dass der Kolben 46 über den Balken 40 den Riegel 24 nach oben zieht, so dass die Rolle 26 der Sperrklinke 12 in den Bereich 28 mit steilerem Winkel gelangt und die Sperrklinke 12 durch die Rückstellfeder 22 aus ihrer eingerückten Stellung (dargestellt) in ihre ausgerückte Stellung bewegt wird. Bei Entlastung des Kupplungspedals 114 nimmt der Pedalhebel 118 seine dargestellte Ruhelage ein, in die er durch eine übliche Kupplungspedalrückstellfeder gedrängt wird. Mit der Kraft der Hauptfeder 42 schiebt der Balken 38 den Riegel 24 nach unten, so dass die Rolle 26 in den Bereich 30 mit flachem Winkel gelangt und die Sperrklinke 12 in ihre eingerückte Lage drückt.

Damit während eines Abschleppvorganges das Kupplungspedal 114 nicht ständig betätigt werden muss, lässt sich dieses durch geeignete Maßnahmen in der betätigten Stellung blockieren. Dies erfolgt beispielsweise durch einen nicht dargestellten Blockierbolzen, der den Pedalhebel 118 in Bezug auf das Fahrzeugchassis festsetzt.

Die Position des Pedalhebels 118 wird durch einen elektrischen Lagesensor 130 erfasst, der mit dem freien Ende 122 des Pedalhebels 118 in Verbindung steht und der ein der jeweiligen Position des Pedalhebels 118 entsprechendes analoges elektrisches Signal ausgibt. Es kann sich dabei um ein mit der Drehachse 116 verbundenes Drehpotentiometer handeln. Im dargestellten Ausführungsbeispiel ist als Lagesensor ein Drehpotentiometer 130 dargestellt, welches über einen Dreharm 132 und eine Lasche 134 mit dem freien Ende 122 des Pedalhebels 118 in Verbindung steht.

Aus Redundanzgründen ist ein Lageschalter 128 vorgesehen, der ebenfalls mit dem freien Ende 122 des Pedalhebels 118 in Verbindung steht. Wenn das Kupplungspedal 114 nicht betätigt wird und sich der Pedalhebel 118 in seiner Ruhestellung befindet, ist der Lageschalter 128 offen. Er schließt, sobald das Kupplungspedal 114 voll durchgetreten ist. Bei Verwendung des Kupplungspedals 114 zur Notbetätigung der Parksperre zeigt das Ausgangssignal des Lageschalters 128 (Schließstellung) somit an, ob die Parksperre aufgehoben wurde.

Insbesondere bei Fahrzeugen mit stufenlosem Antrieb wird die Position des Kupplungspedals häufig durch Lagesensoren oder Lageschalter von einer Getriebesteuerung überwacht, um das Getriebe automatisch auf Neutral zu schalten, sobald das Kupplungspedal 114 betätigt wird. Es ist vorteilhaft diese bereits vorhandenen Bauteile zur Notbetätigung zu verwenden. Die Verwendung des Kupplungspedals 118 zur Notbetätigung ist auch vorteilhaft, weil sich durch die Fußbetätigung hohe Kräfte auf die Verriegelungsvorrichtung 11 übertragen lassen, so dass sich die Kraft der Hauptfeder 42 mühelos überwinden lässt.

Zur Ansteuerung der beiden Magnetventile 56, 58 ist eine elektronische Haupt- oder Getriebesteuereinheit 140 und eine Neben- oder Parksperrensteuereinheit 142 vorgesehen. Die Hauptsteuereinheit 140 steht über die Leitung 144 mit dem nicht gezeigten Zündschlossschalter des Fahrzeugs sowie über die Leitung 146 mit einer Fahrzeugsteuerung 148 in Verbindung, die ihrerseits die Stellung eines Bedienhebels 150 detektiert. Die Hauptsteuerung 140 empfängt über die Leitung 152 Signale von einem ersten Drehzahlsensor 154, der die Drehzahl des Ausgangszahnrades 10 erfasst, sowie über die Leitungen 156 und 158 Signale von dem Lageschalter 128 und von dem Drehpotentiometer 130, welche die Stellung des Kupplungspedals 114 erfassen. Die Hauptsteuereinheit 140 steuert über die Leitung 160 das erste Magnetventil 56 an.

Die Nebensteuereinheit 142 steht über die Leitung 162 unmittelbar mit der nicht gezeigten Fahrzeugbatterie in Verbindung. Sie ist darüber hinaus über die Leitung 164 mit dem Zündschlossschalter verbunden. Die Nebensteuereinheit 142 empfängt über die Leitung 165 Signale von dem Drucksensor 106 sowie über die Leitung 166 Signale von einem zweiten Drehzahlsensor 168, der unabhängig vom ersten Drehzahlsensor 154 die Drehzahl des Ausgangszahnrades 10 erfasst. Die Nebensteuereinheit 142 steuert über die Leitung 170 das zweite Magnetventil 58 an. Die Hauptsteuereinheit 140 und die Nebensteuereinheit 142 tauschen über einen CAN-Bus 172 Daten miteinander aus. Aus Redundanzgründen teilt die Nebensteuereinheit 142 über eine Leitung 174 der Hauptsteuereinheit 140 die durch den zweiten Drehzahlsensor 168 ermittelte Drehzahl mit.

Die Hauptsteuereinheit 140 gibt Signale zum Einlegen (kein Strom) oder Ausrücken (Strom) der Parksperre an die Magnetventile 56, 58 ab. Der Befehl hierzu kommt entweder von der Bedienungsperson über den Bedienhebel 150, die Fahrzeugsteuerung 148 und die Leitung 146 oder ergibt sich aus sicherheitsrelevanten Messgrößen, die in der Hauptsteuereinheit 140 verarbeitet werden. Der Befehl zum Ein- oder Ausrücken der Parksperre wird von der Hauptsteuereinheit 140 direkt zum ersten Magnetventil 56 und indirekt über die Leitung 174 und die Nebensteuereinheit 142, die weitere Überprüfungen vornimmt, zum zweiten Magnetventil 58 geleitet.

Sind beide Magnetventile 56, 58 stromlos, so ergeben sich die in der Zeichnung dargestellten Ventilpositionen, bei denen der Kolbenraum 48 über das zweite Magnetventil 58, das zweite Rückschlagventil 82 und das erste Magnetventil 56 mit dem Vorratsbehälter 70 verbunden ist. Dabei befindet sich der Kolben 46 infolge der Kraft der Druckfeder 50 in seiner oberen Stellung und die Verriegelungseinrichtung 11 wird durch die Hauptfeder 42 in die dargestellte eingerückte Position gedrängt. Das Ablassventil 104 wird durch seine Feder geöffnet und erlaubt ebenfalls einen unmittelbaren Druckausgleich zwischen dem Kolbenraum 48 und dem Vorratsbehälter 70.

Wird bei stromlosem ersten Magnetventil 56 lediglich das zweite Magnetventil 58 mit Strom beaufschlagt, so schaltet letzteres um und verbindet seinen ersten Eingang 78 mit seinem Ausgang 86. Da das erste Magnetventil 56 jedoch den Zustrom von der Druckversorgung sperrt, die Leitungen 74 und 80 nach wie vor mit dem Vorratsbehälter verbunden sind und da weiterhin das Ablassventil 104 offen bleibt, ändert dies nichts an der Stellung des Kolbens 46.

Wird bei stromlosem zweiten Magnetventil 58 lediglich das erste Magnetventil 56 mit Strom beaufschlagt, so schaltet letzteres um und verbindet seinen ersten Eingang 60 mit seinem Ausgang 72. Zwar steht nun in der Verbindungsleitung 80 der Systemdruck an, das zweite Rückschlagventil 82 verhindert jedoch einen Flüssigkeitszufluss zur Kolbenkammer 48. Der Rückfluss vom Kolbenraum zum Vorratsbehälter über 86, 84, 82, 80, 72 ist in diesem Zustand gesperrt, am Eingang 78 des zweiten Magnetventils 58 steht jedoch Druck an, der über eine interne Leckage des Magnetventils 58 zu einem geringen Leckfluss in den Kolbenraum 48 führt. Diese geringe Leckmenge wird über das offene Ablassventil 104 zum Vorratsbehälter 70 abgeführt, so dass sich kein Druck im Kolbenraum 48 aufbauen kann, der zum unerwünschten Ausrücken der Parksperre führen würde. Es ändert sich also auch in diesem Fall nichts am eingerückten Zustand der Parksperre.

Werden jedoch beide Magnetventile 56, 58 mit Strom beaufschlagt und schalten aus der dargestellten stromlosen Stellung in ihre erregte Stellung um, so wird der Systemdruck der Druckversorgungsleitung 66 über das Eingangsrückschlagventil 62, das erste Magnetventil 56, das erste Rückschlagventil 76 und das zweite Magnetventil 58 dem Kolbenraum 48 zugeführt und verschiebt den Kolben 46 gegen die Kraft der Druckfeder 50 und der Hauptfeder 42 nach unten. Die Verriegelungsvorrichtung 11 bewegt sich hierbei aus ihrer eingerückten Stellung in ihre ausgerückte Stellung. Durch den anstehenden Flüssigkeitsstrom schließt das Ablassventil 104. Bei dieser Kolbenstellung wird der Steuerstift 96 durch den Bund 102 des Kolbens 46 aus der Ringnut 100 gedrückt und öffnet das Leckagekompensationsventil 94, so dass der Systemdruck auch über die Verbindungsleitung 90, in der das Druckhalterückschlagventil 88, die Drosselstelle 92 und das Leckagekompensationsventil 94 angeordnet sind, am Kolbenraum 48 ansteht.

Wird bei erregtem (mit Strom beaufschlagtem) zweiten Magnetventil 58 lediglich das erste Magnetventil 56 stromlos gemacht, so schaltet letzteres um und verbindet seinen zweiten Eingang 68 mit seinem Ausgang 72. Zwar ist der Ausgang 72 nun mit dem Vorratsbehälter 70 verbunden, das erste Rückschlagventil 76 verhindert jedoch einen Flüssigkeitsrückfluss aus der Kolbenkammer 48. Dieser steht über die Verbindungsleitung 90 weiterhin mit der Druckversorgungsleitung 66 in Verbindung. Es ändert sich am ausgerückten Zustand der Parksperre nichts.

Wird bei erregtem ersten Magnetventil 56 lediglich das zweite Magnetventil 58 stromlos gemacht, so schaltet letzteres um und verbindet seinen zweiten Eingang 84 mit seinem Ausgang 86. Wegen der Wirkung des zweiten Rückschlagventils 82 ist nun ein Flüssigkeitszufluss von der Druckversorgungsleitung 66 zum Kolbenraum 68 nicht mehr möglich. Jedoch steht die Kolbenkammer 48 weiterhin über die Verbindungsleitung 90 mit der Druckversorgungsleitung 66 in Verbindung. Es ändert sich am ausgerückten Zustand der Parksperre nichts.

Unabhängig von der Stellung der Magnetventile 56, 58 wird durch das Eingangsrückschlagventil 62 ein Flüssigkeitsabfluss vom Kolbenraum 48 in die Druckversorgungsleitung 62 verhindert, so dass sich ein im Kolbenraum 48 aufgebauter Druck nicht wegen eines unbeabsichtigten Druckabfalls in der Druckversorgungsleitung 62 abbaut. Das Druckhalterückschlagventil 88 verhindert einen Flüssigkeitsabfluss vom Kolbenraum 48 über interne Leckage des ersten Magnetventils 56 vom Eingang 60 zum Eingang 68 und damit zum Vorratsbehälter 70. Insbesondere bei Systemdruckausfall während der Fahrt kann eine Restleckage vom Kolbenraum 48 zum Vorratsbehälter 70 auftreten, und zwar über eine interne Leckage des zweiten Magnetventils 58 (vom Ausgang 86 zum Eingang 84), das Rückschlagventil 82 und eine interne Leckage des ersten Magnetventils 56 (vom Ausgang 72 zum Eingang 68). Diese Leckage ist über eine entsprechende Auslegung der Magnetventile 56, 58 derart gering, dass auch bei hoher Öltemperatur (geringe Viskosität) der Druck im Kolbenraum für ca. 10 Minuten soweit aufrechterhalten werden kann, dass ein Einrücken der Parksperre nicht erfolgt.

Werden beide Magnetventile 56, 58 aus ihrem erregten Zustand in ihren stromlosen Zustand umgeschaltet, so wird der Kolbenraum 48 über das zweite Magnetventil 58, das zweite Rückschlagventil 82 und das erste Magnetventil 56 mit dem Vorratsbehälter 70 verbunden, so dass ein Flüssigkeitsabfluss aus dem Kolbenraum 48 zum Vorratsbehälter 70 erfolgt. Die Drosselstelle 92 begrenzt den Flüssigkeitsstrom durch die Verbindungsleitung 90, so dass dieser nicht ausreicht, um den Druck in dem Kolbenraum 48 aufrechtzuerhalten. Der Kolben 46 wandert nach oben, der Steuerstift 96 gleitet in die Ringnut 100 und das Leckagekompensationsventil 94 schließt, so dass der Flüssigkeitsnachfluss über die Verbindungsleitung 90 unterbrochen wird. Das Ablassventil 104 öffnet. Gleichzeitig rückt die Verriegelungseinrichtung 11 die Parksperre ein.

Somit erfolgt eine Umschaltung der Parksperrenfunktion (Druckbeaufschlagung oder Druckentlastung des Kolbenraums) nur dann, wenn beide Magnetventile 56, 58 gleichsinnig umgeschaltet werden, wenn also die Steuereinheiten 140, 142 entsprechende Umschaltsignale an die Magnetventile 56 und 58 abgeben.

Falls keine Störung vorliegt, gibt die Hauptsteuereinheit 140 ein Stromsignal zur Erregung des ersten Magnetventils 56 ab und die Nebensteuereinheit 142 gibt ein Stromsignal zur Erregung des zweiten Magnetventils 58 ab. Wenn der Fahrhebel 150 in seine Parkstellung gebracht wird und die durch die Drehzahlsensoren 154, 168 erfasste Drehzahl des Ausgangszahnrades 10 unter einem vorgebbaren Wert liegt, wird durch die Hauptsteuereinheit 140 der Stromfluss zum ersten Magnetventil 56 unterbrochen. Wenn die durch den Drehzahlsensor 168 erfasste Drehzahl des Ausgangszahnrades 10 unter einem vorgebbaren Wert liegt, wird durch die Nebensteuereinheit 140 auch der Stromfluss zum zweiten Magnetventil 58 unterbrochen.

Weil die Hauptsteuereinheit 140 und die Nebensteuereinheit 142 von den beiden Drehzahlsensoren 154 und 168 unabhängige Drehzahlsignale des Fahrzeugantriebs erhalten, kann zuverlässig (Redundanz) verhindert werden, dass eine defekte Steuereinheit 140, 142 oder ein defekter Drehzahlsensor 154, 168 zu einem unbeabsichtigten Parksperreneinlegen oberhalb einer vorgegebenen Fahrgeschwindigkeit führt.

Durch die direkte Spannungsversorgung der Nebensteuereinheit 142 von der Batterie wird gewährleistet, dass ein Abstellen der Zündung während der Fahrt nicht zum Einlegen der Parksperre führt, weil dann das zweite Magnetventil 58 kein Signal zum Umschalten erhält. Die Leitung 164 vom Zündschlüssel zur Nebensteuereinheit 142 dient lediglich als Wecksignal für die Nebensteuereinheit 142. Die beiden Steuereinheiten 140, 142 sind über einen Kommunikations-BUS 174 verbunden, der eine gegenseitigen Überwachung ermöglicht.

Der Drucksensor 106 liefert an die Nebensteuereinheit 142 jederzeit eine Rückmeldung über die tatsächliche Parksperrenposition. Oberhalb einer oberen Druckschwelle (z.B. 15 bar) gilt die Parksperre als ausgerückt (entriegelt), unterhalb eines unteren Schwellwertes (z.B. 1 bar) gilt die Parksperre als eingelegt. Die untere Druckschwelle liegt sinnvollerweise unterhalb eines Druckes, der sich aus der Federkraft der Druckfeder 50 und der Kolbenfläche des Kolbens 46 ergibt, so dass dieser Wert also erst unterschritten wird, wenn der Kolben 46 am Anschlag der eingerückten Stellung steht, auch wenn das mechanische Gestänge der Verriegelungseinrichtung 11 in der Zahn-auf-Zahn-Stellung blockiert ist und (noch) nicht einrastet.

Wenn die Notbetätigung, z. B. bei Verlust der Parksperrenfunktion, für das Abschleppen benutzt wird und hierbei der Dieselmotor in Betrieb sein soll (um beispielsweise den Versorgungsdruck für die Servolenkung und -bremsen bereitzustellen), erhält die als Getriebesteuereinheit ausgebildete Hauptsteuereinheit 140 über den Lageschalter 128 und das Drehpotentiometer 130 am Kupplungspedal die Anforderung, das Getriebe auf "Neutral" einzustellen. Hiermit wird zuverlässig und ohne zusätzliche Sensoren verhindert, dass das Fahrzeug mit permanent manuell ausgerückter Parksperre betrieben wird. Der Lageschalter 128 und das Drehpotentiometer 130 können somit sowohl für die Getriebesteuerung als auch für die Steuerung der Notfunktion genutzt werden.

## Patentansprüche

1. Notentriegelungseinrichtung für die Parksperre eines Kraftfahrzeugs mit einer Betätigungsmechanik (46, 44, 38, 24, 12, 10), die durch Federmittel (42, 50) in ihre eingerückte Position gedrängt und die durch wenigstens einen durch Ansteuermittel (56, 58) betätigbaren Stellantrieb (46) gegen die Federkraft in ihre ausgerückte Position bewegbar ist, wobei die Betätigungsmechanik (46, 44, 38, 24, 12, 10) mittels mechanischer Verbindungsmittel (108, 110, 112) mit einem in dem Fahrzeugführerstand angeordneten Entriegelungshebel verbindbar ist, durch den sich die Parksperre notentriegeln lässt, **dadurch gekennzeichnet, dass** als Entriegelungshebel das Kupplungspedal (114) des Fahrzeugs genutzt wird und dass durch die Verbindungsmittel (108, 110, 112) wahlweise eine lösbare Verbindung zwischen dem Kupplungspedal (114) und der Betätigungsmechanik (46, 44, 38, 24, 12, 10) herstellbar ist.

2. Einrichtung nach Anspruch 1, **dadurch gekennzeichnet, dass** die Verbindungsmittel einen Bowdenzug (112) enthalten, dessen eines Ende unmittelbar oder mittelbar an der Betätigungsmechanik (46) angreift und dessen anderes Ende für eine Notbetätigung unmittelbar oder mittelbar an dem Kupplungspedal (114) befestigbar ist.

3. Einrichtung nach Anspruch 1 oder 2, **dadurch gekennzeichnet, dass** die Betätigungsmechanik ein Verriegelungsgestänge (38, 24, 12) und einen auf dieses einwirkenden Betätigungskolben (46), der Teil eines als Stellantrieb ausgebildeten Hydraulikzylinders ist, enthält und dass die Verbindungsmittel (108, 110, 112) an dem Betätigungskolben (46) angreifen.

4. Einrichtung nach Anspruch 3, **dadurch gekennzeichnet, dass** sich durch eine Wandung des Hydraulikzylinders ein gegenüber der Wandung abgedichtetes, axial verschiebbares Betätigungselement (108) erstreckt, welches durch Verschiebung auf den Betätigungskolben (46) einwirkt, um diesen gegen die Kraft der Federmittel (42, 50) in seine entriegelte Stellung zu bewegen.

5. Einrichtung nach Anspruch 4, **dadurch gekennzeichnet, dass** das Betätigungselement (108) in den Kolbenraum (48) des Hydraulikzylinders ragt und an der Kolbenstirnseite angreift.

6. Einrichtung nach Anspruch 4 oder 5, **dadurch gekennzeichnet, dass** ein Umlenkhebel (110) vorgesehen ist, dessen mittlerer Bereich verschwenkbar an einem Gehäuseteil gelagert ist und an dessen einem Hebelende ein Ende eines Bowdenzugs (112) angreift und dessen anderes Ende auf das Betätigungselement (108) im Sinne einer axialen Verschiebung einwirkt.

7. Einrichtung nach einem der Ansprüche 1 bis 6, **dadurch gekennzeichnet, dass** Arretierungsmittel vorgesehen sind, durch die das Kupplungspedal (114) in seiner durchgetretenen Stellung festsetzbar ist.

8. Einrichtung nach einem der Ansprüche 1 bis 7, **dadurch gekennzeichnet, dass** wenigstens ein Kupplungssensor (128, 130) zur Erfassung der Stellung des Kupplungshebels (114) vorgesehen ist.

9. Einrichtung nach einem der Ansprüche 1 bis 8, **dadurch gekennzeichnet, dass** wenigstens ein Kupplungssensor ein Lageschalter (128) ist, der bei durchgetretenem Kupplungspedal umschaltet.

## Claims

1. Emergency unlocking device for the parking brake of a motor vehicle having an activation mechanism (46, 44, 38, 24, 12, 10) which is forced into its engaged position by spring means (42, 50) and which can be moved counter to the spring force into its disengaged position by at least one actuator drive (46) which can be activated by drive means (56, 58), wherein the activation mechanism (46, 44, 38, 24, 12, 10) can be connected using mechanical connecting means (108, 110, 112) to an unlocking lever which is arranged in the driver's cab of the vehicle and by means of which an emergency release of the parking brake can be performed, **characterized in that** the clutch pedal (114) of the vehicle is used as the unlocking lever, and **in that** the connecting means (108, 110, 112) can be used optionally to produce a releasable connection between the clutch pedal (114) and the activation mechanism (46, 44, 38, 24, 12, 10).

2. Device according to Claim 1, **characterized in that** the connecting means contain a Bowden cable (112), one end of which engages directly or indirectly on the activation mechanism (46) and the other end of which can be attached directly or indirectly to the clutch pedal (114) for an emergency activation.

3. Device according to Claim 1 or 2, **characterized in that** the activation mechanism contains a locking linkage (38, 24, 12) and an activation piston (46) which acts thereon and is part of a hydraulic cylinder which is embodied as an actuator drive, and **in that** the connecting means (108, 110, 112) engage on the activation piston (46).

4. Device according to Claim 3, **characterized in that** an axially slidable activation element (108) which is sealed with respect to the wall and which acts through sliding on the activation piston (46), in order to move it into its unlocked position counter to the force of the spring means (42, 50), extends through a wall of the hydraulic cylinder.

5. Device according to Claim 4, **characterized in that** the activation element (108) projects into the piston chamber (48) of the hydraulic cylinder and engages on the piston end side.

6. Device according to Claim 4 or 5, **characterized in that** a deflection lever (110) is provided, the central region of which is mounted so as to be pivotable on a housing part, and on one of the lever ends of which one end of a Bowden cable (112) engages, and the other end of which acts on the activation element (108) in the sense of axial sliding.

7. Device according to one of Claims 1 to 6, **characterized in that** locking means are provided by which the clutch pedal (114) can be secured in its fully depressed position.

8. Device according to one of Claims 1 to 7, **characterized in that** at least one clutch sensor (128, 130) is provided for sensing the position of the clutch lever (114).

9. Device according to one of Claims 1 to 8, **characterized in that** at least one clutch sensor is a position switch (128) which switches over when the clutch pedal is fully depressed.

## Revendications

1. Dispositif de déverrouillage d'urgence pour le frein de stationnement d'un véhicule automobile, comportant un mécanisme d'actionnement (46, 44, 38, 24, 12, 10), qui est poussé dans sa position enclenchée par des moyens de ressort (42, 50) et qui peut être amené dans sa position déclenchée à l'encontre de la force des ressorts par l'intermédiaire d'au moins un servomoteur (46) actionnable par des moyens de commande (56, 58), le mécanisme d'actionnement (46, 44, 38, 24, 12, 10) pouvant être relié par l'intermédiaire de moyens de liaison mécaniques (108, 110, 112) à un levier de déverrouillage, qui est monté dans le poste de conduite du véhicule et par lequel le frein de stationnement peut être déverrouillé d'urgence, **caractérisé en ce que** la pédale d'embrayage (114) du véhicule est utilisée comme levier de déverrouillage et **en ce que**, par l'intermédiaire des moyens de liaison (108, 110, 112), il est possible de réaliser au choix une liaison amovible entre la pédale d'embrayage (114) et le mécanisme d'actionnement (46, 44, 38, 24, 12, 10).

2. Dispositif selon la revendication 1, **caractérisé en ce que** les moyens de liaison comportent un câble Bowden (112) dont une extrémité entre en contact directement ou indirectement avec le mécanisme d'actionnement (46) et dont l'autre extrémité peut être fixée directement ou indirectement à la pédale d'embrayage (114) en vue d'un actionnement d'urgence.

3. Dispositif selon la revendication 1 ou 2, **caractérisé en ce que** le mécanisme d'actionnement comporte une tringlerie de verrouillage (38, 24, 12) et un piston d'actionnement (46), qui agit sur celle-ci et qui fait partie d'un vérin hydraulique réalisé sous forme de servomoteur, et **en ce que** les moyens de liaison (108, 110, 112) entrent en contact avec le piston d'actionnement (46).

4. Dispositif selon la revendication 3, **caractérisé en ce que** à travers une paroi du vérin hydraulique passe un élément d'actionnement (108) mobile dans le sens axial, qui est rendu étanche par rapport à la paroi et qui, sous l'effet d'un déplacement, agit sur le piston d'actionnement (46) afin de déplacer celui-ci, à l'encontre de la force des moyens de ressort (42, 50), dans sa position déverrouillée.

5. Dispositif selon la revendication 4, **caractérisé en ce que** l'élément d'actionnement (108) s'engage dans la chambre de piston (48) du vérin hydraulique et entre en contact avec la face frontale du piston.

6. Dispositif selon la revendication 4 ou 5, **caractérisé en ce qu'**il est prévu un levier de renvoi (110), dont la zone centrale est montée pivotante sur une partie du carter et dont une extrémité entre en contact avec une extrémité du câble Bowden (112) et dont l'autre extrémité agit sur l'élément d'actionnement (108) dans le sens d'un déplacement axial.

7. Dispositif selon l'une quelconque des revendications 1 à 6, **caractérisé en ce qu'**il est prévu des moyens d'arrêt, par lesquels la pédale d'embrayage (114) peut être immobilisée dans sa position débrayée à fond.

8. Dispositif selon l'une quelconque des revendications 1 à 7, **caractérisé en ce qu'**il est prévu au moins un capteur de couplage (128, 130) destiné à détecter la position de la pédale d'embrayage (114).

9. Dispositif selon l'une quelconque des revendications 1 à 8, **caractérisé en ce que** au moins un capteur de couplage est un interrupteur de position (128) qui passe d'une position à l'autre lorsque la pédale d'embrayage est débrayée à fond.
